# EUROPEAN PATENT APPLICATION

(11) **EP 1 463 258 A1**
(43) Date of publication of application: **29.09.2004**
(21) Application number: 03394035.4
(22) Date of filing: 28.03.2003
(51) Int. Cl.: H04L 29/06

(54) **A system and method for transferring data over a wireless communications network**

(71) Applicant: Mobile Integrated Solutions Limited, Dublin 2 (IE)
(72) Inventor: Lindahl, Göthe, 90594 Urnea (SE)
(74) Representative: Lane, Cathal Michael

(57) **Abstract**

A system and method that enables a selective transmission of one more datafiles to a remote client device from a central server where they are stored is described. The system provides for a subdivision of datafiles into one or more transmission portions. Each of the datafiles and the subdivisions thereof is associated with search parameters to enable a user at a remote device to interrogate the system so as to select a subset of the stored datafiles for subsequent retrieval and playing at the client device. A bookmarking provision is additionally provided that enables a resumption of playing at or a direct skip to a portion of the played tranmission portion.

## Description

### Field of the Invention

The present invention relates to a method and an apparatus for transmitting media-data over a communications network, and in particular for transmitting data in the form of audio books or the like over a wireless network. Within the present specification the term "media-data" is intended to encompass any data type relating to audio in the form of books or music or the like, visual imagery such as films, sporting events etc., or similar type material as will be well known to those skilled in the art.

### Background to the Invention

Audio or digital talking books are well known in the art. They provide the user with means of being able to enjoy the contents of a book by simply listening to a recording of a storyteller reading the book aloud, rather than having to physically read the book. This is of particular benefit to a number of groups of society, especially those people with vision difficulties for example, who, before the advent of audio books, would have had to rely on a friend to read a book aloud if they wished to enjoy the book. Audio books are also of great benefit to those people who work in jobs where they are permitted to listen to music as they work, or who spend a large amount of their time driving, as an audio book provides them with the opportunity to pass their time by listening to a story as they work or travel.

Audio books may be provided through a variety of media. Typically, the recording is stored on a cassette tape, a CD or a DVD. When a user wishes to hear the audio book, they can then insert the chosen form of audio book in its corresponding media player, and initiate a play of the audio book. Typically, these media are provided with the means of enabling a user to control the play of the audio book. For example, a user may wish to stop or pause play during the course of the storytelling, and subsequently resume the story from the paused point. The books are typically of a long duration and require multiple hours to enable a user to listen to an entire book. It is unusual that a user will complete the listening at one sitting and various techniques have been developed to ensure that a listener can stop at one point and then pick up the story at a later time from the same point. The simplest technique is for the user to press the stop button, as discussed above, but other techniques which provide for the navigation of audio files, are also known. One such technique is known as the DAISY (Digital Accessible Information SYstem) and was created originally to facilitate the visually impaired.

Audio books created using the DAISY format consist of navigable audio files which may be accessed with a portable player or via computer. It enables readers to examine a book by page, by section, by chapter, or use a table of contents or an index. Users can navigate through the audio and/or electronic text version of the book by moving among the headings, chapters, and pages. This is achieved by the standard through the creation of a structured text file integrated with a human-narrated audio file. DAISY books are typically stored on currently available media such as CDs or DVDs. The DAISY format also enables multiple DAISY Digital Talking Books to be stored on the one media.

In the past number of years, there has been a huge growth in the world-wide communications network, and in particular in the use of the internet and wireless communications. During this time, the capacity and speeds of communication networks have been significantly improved, which has enabled the technology sector to provide innovations that heretofore would have been thought as inconceivable to provide over a communication channel. In the field of audio for example, the ISO standard known as MPEG (Moving Picture Experts Group) has enabled the transfer of digital audio files via a communications network such as the internet. This standard involves the compressing of the audio files for transmission over a network. This has enabled music enthusiasts to obtain audio files of their favourite track on the internet and download them to their personal computer for playing either on the computer, or on a dedicated MP3 player. Such transmission of data has been possible due to the bandwidth associated with the internet connections, and the fact that when downloading or retrieving information from a remote site, the user can maintain a prolonged connection with the remote server of a duration sufficient to enable a complete download of the desired file or files.

Such bandwidth is not yet possible over wireless communications channels such as those provided in the GSM mobile telecommunication networks. Although the bandwidth has improved with the advent of 2.5 and 3G technology it has not yet reached the speeds possible using fixed lines. With the developments in the new network protocols more and more applications have been developed for mobile handsets and the functionality associated therewith. It will, for example, be well known to those in the art that mobile handset functionality has extended beyond that of a simple telephone and now includes the ability to serve as a media player etc. In such applications the user can retrieve and store short audio files such as songs etc and then play them using their mobile handset. It is also known to transmit video images over such networks which can then be viewed on the handset. With all these known applications the type of file that is transmitted is a relatively short file which can be retrieved and played independently of other data files. Such applications are well suited to the habits of most users who do not wish to maintain an extended download connection but rather like to be able to download in a reduced time frame and then listen or view what they have downloaded.

It will be appreciated that it would be of great benefit to be able to also provide audio books over such communication channels, such as a wireless narrowband communication channel. However the current MP3 format, while providing all the necessary features required for its intended usage of downloading one or more individual tracks, does not provide a suitable format for transmission of audio books over wireless narrowband links. As detailed above, audio books typically contain a large amount of data -for example, it would not be unusual for an audio book to include data for nine hours of listening. This makes it difficult to download it to small devices with a small storage space. Even by using the MP3 format for compressing the audio files, the download time is too long to provide a practical implementation for audio books, especially over wireless narrowband links. Furthermore, the MP3 format does not provide any means of controlling the audio stream, which would be required if it were to be used for audio books, or other files of large size.

Although the DAISY standard identified above supports a variety of audio file standards, including the MP3 audio file format, it is not suitable for use over a narrowband wireless network. Furthermore, the DAISY standard enables the user to play an audio file by highlighting that portion of the text of the book which they wish to listen to. However the DAISY standard does not provide any facility for a user to use voice control to control the playback of the book, which would be a very useful feature, especially for example when playback is to be initiaited on mobile phone devices.

There is therefore a need to provide a method and apparatus for transmitting large files such as audio books or other media data types over a wireless telecommunications network.

### Summary of the Invention

Accordingly the present invention provides a networked architecture that enables a communication between one or more remote client devices and a central server. The central server maintains a datastore of media datafiles that may be retrieved by a user for playing on a suitable media player provided on their client device. Each of the datafiles is sub-dividable, the subdivision being effected to enable a searching and download of smaller portions of the larger datafile.

The independent claims define features of a system and method according to the present invention. By providing a system and method according to the present invention it is possible to enable a user to obtain selective portions of media datafiles over a telecommunications network.

Advantageous embodiments of the present invention are described in dependent claims.

These and other features of the present invention will be better understood with reference to preferred embodiments of the invention described hereinafter with reference to the following drawings.

### Brief Description of the Drawings

Figure 1 shows a diagram of a typical environment in which the present invention could be used,
Figure 2 shows a process flow of the present invention of a typical user interaction at the client device with the server device, viewed from the client side of the system and
Figure 3 shows a process flow of the present invention of a typical user interaction at the client device with the server device, viewed from the server side of the system.

### Detailed Description of the Drawings

The present invention provides a system for transmitting large data files such as audio books over a communications network, and in particular over wireless telecommunications networks. In a preferred application, the invention enables a user of the system to select an audio book from a library of audio books and to download part or all of the audio book to a network device for playback on demand. The invention also provides the user with the facility to stop and later resume playback starting from the stopped point as desired. Additionally, the invention provides its users with the option of giving voice commands to select and manage their audio books. It will be appreciated that the implementation of the techniques of the present invention to the field of audio books is an example of the type of data file that can be managed and downloaded by a user and that it is not intended to limit the invention to such media types. For the sake of convenience, and for brevity of explanation, an application of the invention to the field of audio books will now follow.

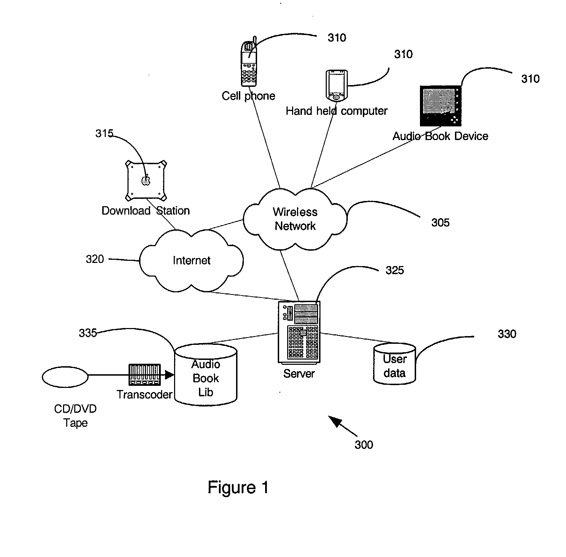

Figure 1 shows a pictorial diagram of a typical implementation of the present invention. The system 300 of the present invention includes a client device such as a mobile handset and a server device which are connected to each other via a communications network. Typically the communications network will be a wireless network 305, such as a GSM type network. The client device 310 may be for example a special audio book device, a hand-held computer, a mobile phone or a gateway device to an existing sound device such as a car stereo. The client device 310 may be connected directly to the server device using a wireless connection 305. Alternatively, the client device 305 may be connected to the internet via a fixed line, or placed in a download station 315, which in turn is connected to the internet 320.

The server device 325 is adapted to store data relating to the audio books and its associated registered users, and to transmit this data to and to receive data from the client device as required. In this illustrated example, the server device comprises two main databases: a user datastore 330 and an audio book library 335. The user datastore contains details associated with the registered users of the system in the form of user profiles, for example details of the current audio books each user is subscribed to, and a bookmark file containing pointers associated with the passage they last listened to for each audio book they are currently reading (i.e. for each recording of a reading of a book which they have subscribed to listen to). The user data store additionally contains information about the user as a subscriber to one and more books, a unique identifier associated with the user such as a subscriber Identity connected to the IMEI-code (International Mobile Equipment Identity), to the MSISDN (Mobile Station Internation ISDN like +353 (99) 999 1234) number or any other secure identification. The datastore may additionally include information, or point to additional datastores where the information is stored, to enable a charging and billing of the user. The user datastore will also include information pertaining to book related information such as specific bookmarks linked to books that the user has subsribed to. The audio book library contains a datastore of audio books which may be selected for reading (i.e. hearing) by a registered user. The audio book library may also contain information about book prices, the category the book belongs too or is sorted under, author, publisher, ISBN number (International Standard Book Number), Year published etc. search attributes and reader information. It will be appreciated therefore that the user datastore is user specific whereas the audio book library is simple a datastore of available books for subsequent downloading by a user. It will be further appreciated that by providing a searchable book library it is possible for a remote user to access the audio book libarary and by virtue of effecting a search strategy can obtain a book of choice.

In order to provide such a searchable facility it is necessary to arrange the audio datastore in a manner that enables an effective searching. As will be appreciated, the present invention provides for the selective download of books or other media data files of choice, but also enables the selective retrieval of specific portions of that book. To enable such a dual download it is necessary that the library is arranged that a first search can be conducted to narrow down the files of interest and a second search then enables a search within that narrowed range. The segmentation of individual data files into two or more specific sub-portions requires an administrative interaction with each of the stored datafiles so as to define specific sub-portions within each of the larger files; the sub-portions being individually searchable and retrievable from the larger parent file.

Each of the audio files, or in alternative embodiments other types of datafile are desirably input to the system of the present invention from an external source. In the example of the application to an audio book environment, the datafile for a specific book is relayed from a storage device such as a CD/DVD/tape or the like via a transcoder to the audio book library. In order to provide the searching that is enabled by the system and method of the invention, it is necessary to characterise both the parent datafile that makes a specific book and the subdivisions thereof, which may be used for later download, with search parameters. This may be done externally prior to importation of the datafile to the audio library or may be done subsequent to importation.

In order to provide an effective service it is important that the system of the invention is provided with some sort of control over who can and cannot interface with the system. In a preferred embodiment, the present invention is adapted to provide an audio book service to registered users only. In order to provide this functionality, the system is additionally provided with an authentication means for enabling the system to verify whether a user is a registered user of the system. If the system verifies that the user requesting access is previously registered, the system permits them to avail of its services. Alternatively, if the user is not a registered user, the system is adapted to register the new user. In a preferred embodiment, the invention utilises the authenticators that are inherent on most mobile devices such as the device IMEI number or the SIM card MSISDN. Authentication is provided through the client passing the MSISDN number found on the SIM-card for the wireless network subscription or the device IMEI number, to the server. Both of these numbers can be used to track a specific person, but the MSISDN number is preferable as it identifies a network service subscriber as opposed to the IMEI number which only identifies an owner of a device. Desirably this information is pulled from the remote device by the authenticating server, and as such it is not possible for the remote user to "invent" some arbitary number for presentation to the server. The pulling of such authenticator numbers from the remote device is well known in the art of telecommunications.

The system may also be adapted to provide for the charging for the services it provides to a registered user. When a registered user requests a book, the system presents the user with the cost associated with subscribing to that particular book. The server contains information about the cost for each book, per chapter or other chargeable part, which is sent to the client. The system will then only transmit the book to the registered user on receipt of payment of this book subscription fee or if such a fee is already marked as "pay receipted" in the server. In the charging mechanism the telecom operator could also be involved in charging and billing based upon the URL the user is accessing. This service already exist among several telecom operators. In this case the user will have the cost for the book specified on the telecom operators phone bill, otherwise the system will produce an invoice periodically sent to the user, containing only the charge for the book and not any transmission charges, which can be found on the telecom operators invoice.

The present invention is adapted to transmit the audio book stored at the server device 325 to the client device 310 on request. The invention is adapted so that the audio book may be transcoded to an audio format that fits small client devices with small storage, and which is also suitable for low bandwidth transmission. It provides for two modes of transmission of the audio book data file from the server device to the client device. Transmission may be either a selective download of an audio file of a chapter of a selected book, or a transmission using streaming technology. The user is not restricted to chapters. He/she can randomly bookmark and then resume from that bookmarked location, but charging is restricted to the whole book, index, chapter or any other logical cohesion totally separate from bookmarking. The user can also keep several bookmarks for one book. It might be that the user finds important parts he/she wants to return to later, and as such may require the use of the multiple bookmarks within one book.

In a preferred embodiment of the invention, transmission is carried out using streaming technology, as this technology enables a user to download only the required data needed for the next couple of seconds. This means that the transmission of the audio data over the network is only 1-5 seconds ahead of the actual playing of the audio and very little intermediate storage is needed which suites small wireless devices. During the number of seconds the transmission is ahead of the playing of the audio, it should have time to recover transmission failures and decode the data into audio ready to be played. A typical protocol used in the streaming transmission case is RTSP (Real Time Streaming Protocol) over RTP (real Time Protocol) and UDP/IP (User Datagram Protocol/Internet Protocol). However, the present invention is adapted to also enable the downloading of audio books on a chapter per chapter basis or any other logical unit, so that the system may be used in conjunction with small client devices, which may be only capable of receiving data using the HTTP (Hyper Text Transfer Protocol) protocol (i.e. via selected download).

In one embodiment of the present invention, selected download is accomplished using the HTTP protocol, while streaming is accomplished using the RTSP protocol. However any other suitable protocols could be used to provide the same functionality.

As previously mentioned, one of the main problems currently associated with the provision of audio books over a narrowband communications network has been the bandwidth requirement of narrowband networks. The prior art audio books which make use of the DAISY standard support use the MPEG format to effect a transmission of the files. However the MPEG format is unable to provide the required transmission speeds over a narrowband link. The present invention overcomes this problem by providing a high level speech encoder adapted for use with the DAISY audio book standard or some other suitable segmentation technique.
The provision of a high level speech encoder enables the bandwidth demand to be brought down to 2-10K bits per second, and thus enables the transmission of an audio book over a narrowband link. In one embodiment of the present invention, the high level speech encoding software used is the Speex speech codec. This speech codec provides very good quality speech encoding at a low bit rate. A speech encoder is integrated in the server and a speech decoder is integrated in the client. The encoding at the server, which is CPU intensive, can be processed in advance using the codec on raw audio material or transcoding it from other formats and storing the data in the book library. Alternatively, the encoding can be conducted at the same time as the book is transmitted to the client if the server is capable of doing so. The client does not have to use a lot of CPU resources to decode the material it receives. The format must support an easy and simple decoding process. When the download technique is used the downloaded file is stored in its compressed format to save space. As such it may be necessary to store multiple copies of the same datafile at the server; a first copy being in an uncompressed state and suitable for search or as a master copy, whereas the second copy will be used for the download purposes and is retrieved for specific downloads.

The present invention also provides the option for the user to issue commands to the server device by means of voice commands. This provision is of major benefit in many situations, for example it enables the use of the system in situations where people are required to have their hands free for other duties. Raw or very simple compression of the voice command is captured at the client and transmitted to the server. The server may pass this voice command to a voice-to-text system of which several exist today. The output text from the voice-to-text system is captured by the server and transmitted to the client. In some client devices simple voice-to-text functionality already exist that can be used by the client. Examples of such techniques include for example the ART (Advanced Research Technologies) (http://www.artcomp.com) Smartspeak™ product which isaimed for the Symbian OS mobile phones. These systems have API's (Application Programming Interface) for external systems to use, and as such can be adapted for application with the system of the present invention.

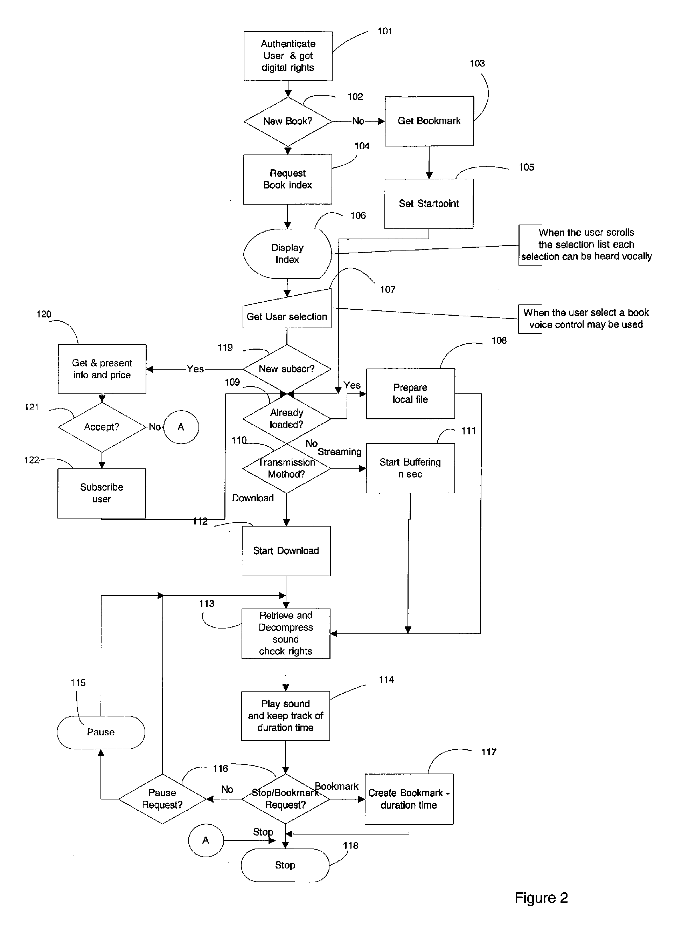

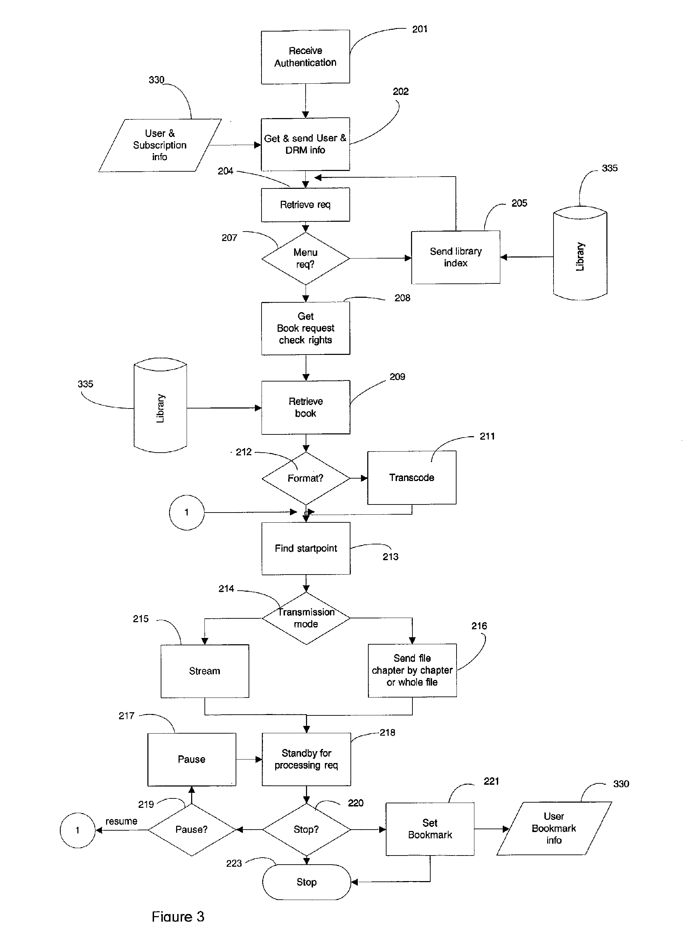

These and other features of the present invention will be more clearly understood with reference to typical process flows of the invention, as shown in the accompanying Figures 2 and 3.

Figure 2 shows a process flow of the present invention of a typical user interaction at the client device 310 with the server device 325, when viewed from the client side of the system. In order for a user to gain access to the system of the present invention, the user must first register with the system. This could be done through a web page or the client presenting the user with a menu where necessary information can be entered. The client automatically sends the MSISDN or the IMEI numbers which can be retrieved from the hardware or the SIM-card by the client. The client sends these numbers every time a new contact is taken with the server. The provision of a registration of a user with the system enables the system to authenticate the user every subsequent time they wish to access the system. In step 101 a registered user who has requested access to the system of the present invention is authenticated at the client device 310. It will be appreciated that the authentication takes place at the beginning of any communication link between the client device and the server device. The Security integrity could be increased by introducing encryption, but by sending the SIM-cards MSISDN and IMEI numbers, which are trusted by the telecom operators, it should be sufficient in most cases.

Typically the authentication is carried out by comparing an identifier presented by the user device with a previously stored identifier, associated with the user, at the server . If the pair of user identifiers matches, the user is granted access to the system and a session is established. However it will be appreciated that the exact authentication procedure will depend on the type of client device 310 being used by the user, and may also differ in the type of material being requested. Normally the phone or the device carrying a "phone communication card" has a SIM-card with a MSISDN number and a device on a Wireless LAN (IEEE 802.11 etc) has a hardware MAC (Medium Access Control) address, that can both be read by an application using these devices through an API, and they can not be tampered with. For example, if the client device is a mobile phone, the authentication may be carried out by comparing the user's mobile phone SIM-card ID with a previously stored, on the server, SIM-card ID associated with the mobile phone of the registered user. In the authentication answer the server could send a small list of already payed or free digital rights to read a book like in step 101. It will be further appreciated that authentication based on hardware identifiers could be supplemented with additional security features such as incorporation of PIN numbers, biometric identification, credit card authentication or the like.

In step 102 the client device queries the user whether they wish to hear a new audio book, or to resume playback of a previously requested audio book. If the user requests a new book, the process moves to step 104, alternatively if the user requests to resume playback of a previously requested book, the process moves to step 103. In step 104 a request is made to the server device 325 to provide an index of the library of audio books stored in the audio book library 335 for inspection by the user. The server device responds by providing a library index of all the audio books stored for display by the client device (step 106).An alternative is to let the user navigate among categories and then select a book within a category of books. The user may then scroll through the list displayed at the client device of all the audio books available on the system. As the user scrolls through the list, the title of each book is transmitted vocally. The user may then select their chosen audio book from the index by either a manual command or a voice command. In an alternative process flow, the user may choose to search for an audio book by providing a title, author, ISBN number, or another suitable unique identifier associated with a stored audio book to the client device. Once the user has selected the audio book they require by any of the above means, the selected book is transmitted from the client device to the server device (step 107).

Alternatively, if the user requests to resume playback from the last heard passage of a previously requested book, the process moves to step 103, where the bookmark (i.e. the point in the book where the user had paused reading) associated with the book which the user wishes to resume reading is obtained from the server, and the starting point for the current audio reading session may then be determined (step 105). Before the audio file is requested from the server a check is done that it is not on local memory (step 109).

Before the selected new book that is not bookmarked is transmitted from the server device to the client device the system verifies if the registered user has previously subscribed to the book i.e. whether the book has been accepted to be paid for (step 119). If the user has not subscribed to the book, the user is presented with the cost (step 120), which can be either accepted (step 121) or rejected (121a) by the user. If the user rejects the charge, the system denies the user access to its services and the session ends.

Alternatively, if the user accepts the charge by pressing a button on the remote device termed the "accepted button" or by giving a vocal command corresponding to the accept button, which is sent to the server to be stored in the users data store, the user is subscribed to the book (step 122). Once the system has determined that the user has subscribed to the book, the process moves to step 109. In step 109 the system checks if the book is already loaded on the client device, for example in the case where the user had already transmitted and heard a portion of the book in an earlier session. If the audio book has not been already loaded, the file is transmitted to the client device from the server device. At this stage, the transmission method for the transfer of the audio book file is determined (step 110). This will typically be decided by a parameter set at installation by an installation program. On application of a simple test of the communication capabilities that exist on the device, the installation program determines by use of different communication protocols etc. and by effecting a check on other capabilities like storage capabilities etc. what are the preferably tranmission methods for the specific remoted device. These parameters represent default parameters for this device and could therefore be changed by the user afterwards if so desired.. As previously mentioned, the transmission may be either carried out by streaming or by selective download. If the selected transmission method is streaming, the process moves to step 111, where the audio file, or portions of it if so selected, is buffered and transmitted. Alternatively, the process moves to step 112 where the audio file is downloaded on a chapter-by-chapter basis. Both methods of transmission involve the compression of the audio data file for transmission. In the download method the whole file, or the whole selected portion of the file, is first transmitted to the client. On receipt of the downloaded file it may be played. It is also possible to provide for the transmission of files from the remote server to the client device in an encrypted form. If such encryption is used the whole file or portion of the file is decrypted on receipt at the client device and then decompressed and played. This is a sequential approach which is easier to perform on small devices which may have difficulties performing several tasks at the same time.In the streaming method, a parallel approach is adopted,i.e. the file is being continuously transmitted, buffered on the receiving side and the received data being played as it is received, with as short delay as possible between reception and playing. The delay depends on network retransmissions, if encryption is used and the time to decrypt and the delay for decompressing the compressed data.

If the book is already loaded, then the local file is prepared (step 108) which means that no transmission needs to be carried out but a file read instead, decompressed and played.

Once part or the entire book is transmitted to the client device the process moves to step 113, where the compressed audio file is retrieved and decompressed in preparation for playback. If the server finds that the rights to listen to the requested file does not exist it might deliver an error return message instead of the book data, which the client presents to the user, typically in the form of a graphical message on a screen of the device. Alternatively the error message may be provided as an audio file.The client device then initiates play of the audio book (at either the beginning of the book or from the point as determined by the stored bookmark) in step 114. As the book is being played, a timer is recording the elapsing time. The timer records the elapsing time so that a bookmark may be created if requested at a later date which contains information on the time at which the user paused play. This is an offset relative to the beginning of the book. If the user has started from a bookmark or a logical portion of the book (for instance a chapter), then the server is supplying the client with the offset at the request for the portion. This offset is then added to the offset created when the bookmark was taken.

During playback of the audio book, the registered user can choose to interrupt the transmission at any time, by either issuing a manual or a voice command (step 116). If the user wishes to end the current session and resume the hearing of the audio book at a later date from the passage in the book at wish to currently stop play, they can request that a bookmark be set. The client device will then create a bookmark associated with the recorded time at which the user paused play, and then transmit the bookmark to the server device for storage in the user data store 330 (step 117). It will be appreciated that the timing sequence which determines the positioning of the bookmark is desirably determined relative to a time on the client device as opposed to a time defined by the server. Such localisation of the definition of the timing ensures that when a bookmark is created it is defined relative to the user as opposed to how a server may ascertain what the time of issuance of the bookmark was. This is advantageous in that it obviates a possibility of time lags or delays in creation of the bookmark. Once created, a bookmark may then be uploaded to the server where it is cross-correlated with the corresponding portion of the data file that is resident on the server.

Alternatively, the user may simply wish to pause or stop play for a period. If the user wishes to make a pause in the playing, the process moves to step 115. The user may then resume play from where it was paused at any stage, at which the process returns to step 113. Alternatively, the user may stop play completely and end the session (step 118).

It will be understood that in normal operation that only the latest requested file or portion of a file is saved for later use. Old files or portions of files are deleted before the client ends or a new book or portion of a book is requested. A cleanup check could also be done when the system restarts. How much to store and whether anything should be stored at all desirably effected using a set of parameters defined at installation but later user configurable.

Figure 3 shows a process flow of the present invention of a typical user interaction from the client device 310 with the server device 325, viewed from the server side of the system. In step 201 the server receives an authentication request from the client device. The process then moves to step 202 where the server device receives user information from the client device and sends information stored in its user data store 330 to the client device related to the authentication process, to enable the system to authenticate the registered user. Once the user is authenticated, the process moves to step 204.Authentication is done by checking the user ID code (MSISDN and IMEI codes or other codes related to user or device) in the user data store against the code delivered from the users device. Any prepaid rights to use a book is reported to the client or a book that the user already has started but not finished or may want to read again.In step 204, the server retrieves the user request from the client device which indicates whether the user wishes to hear a new audio book, or to resume playback of a previously requested audio book. If the user wishes to hear a new audio book and has also requested to be provided with a library index of all the audio books stored at the server device (step 207), the process moves to step 205, where the server retrieves the library index from the audio book library 206 and transmits it to the client device. The process then continues at step 204, and the server waits to receive a request for a selected book from the library index. As previously detailed, the user may also request an audio book by providing the server with a suitable unique identifier associated with the chosen book.

Once the server has received a request for a selected book the user wishes to hear or resume hearing from the client device, the process moves to step 208. In step 208 the server verifies whether the user has the rights to listen to the selected book, i.e. whether the user has subscribed to the particular book by paying for the book. If the server establishes that the user has not paid for the book, then this is signalled to the client, which can then present the user with the cost associated with subscribing to the book, as detailed previously. Once the user has paid for the book, the process moves to step 209 where the book is retrieved from the audio book library 335. If the user has sent a bookmark request, indicating they wish to resume hearing a selected book from where they made a pause in the book in a previous session, the server must first retrieve the bookmark associated with the selected book from the user profile stored in the user datastore 203. The server then determines the format for transmission of the selected book from the server to the client (step 212), and transcoded the book to a low-bandwidth suitable format if required (step 211). The process then moves to step 213, where the starting point for play is determined, the starting point being either the beginning of the book, or the place as indicated by the selected bookmark associated with the book. In step 214 the server determines the transmission mode requested by the client, the transmission mode being selected from either a selected download or the streaming of the audio file. If the client has requested streaming, the process moves to step 215, where streaming of the audio file of the selected book is begun from the server to the client, which starts to play at the same time it receives the first data. Alternatively, the process moves to step 216, where the audio book is transmitted from the server to the client by downloading the audio file either chapter-by-chapter, or the whole file, as required.

While the server is transmitting the selected book, it remains on standby (step 218), for any further processing requests which may be sent by the client. For example, the server may receive a stop request from the client (step 220). If it receives a stop request, the server first determines whether the request was for a pause stop (step 219), a request for a bookmark to be set, or a simple stop. If the request was for a stop, the server stops transmission (223) and the session ends. However if the request was for a pause, the server pauses the audio playback (217), and awaits a further processing request (step 218) before resuming play. If on the other hand, the request was for the server to set a bookmark, the server proceeds to set a bookmark 221 associated with the time at which the reading of the audio book was stopped, and then sends this bookmark to the user data store 330, for retrieval during a later session.

It will be appreciated that the above flowcharts are exemplary embodiments of the process flow of the system of the current invention, and that other process flows are possible. For example, the user may request information on one or more of the audio books stored in the system. In this case, the client would send an information request to the server for a selected book, and the server would respond with the requested information, such as a summary of the story, or information about the author.

It will be appreciated that the present invention provides an apparatus and a method for transmitting an audio book over a communications network, and in particular over a narrow band wireless network. This invention provides users with the convenience of being able to access an audio book library over any wireless network, and to download and to listen to a book of their choice. The present invention also provides users with the convenience of choice of a number of client devices which they may use to access the system over a wireless network. The user may choose to use a dedicated audio book device, which is equipped with a sound system, earphones, a microphone, storage, a keyboard and or touch screen, an antenna, a network-transceiver, and a screen. Alternatively they may prefer to use their existing cell phone or a handheld computer for access.

The invention also provides the user with all the necessary options they may require when using an audio book, for example the ability to create a bookmark should they wish to pause play and to resume the hearing at a later date, or to search for information about the author of the book. The invention further provides the additional feature of enabling users to issue both manual and voice commands to manage their current session.

It will be appreciated that implementation of the present invention has been described with reference to a preferred application in use with audio books. It will be understood that such an application is exemplary of the type of data file that may be selectively retrieved from a central server by a remote user, and that it is not intended to limit the present invention to any one data type. For example, the type of data file stored could be video imagery- either alone or in combination with an accompanying audio track, and a user could, in accordance with the present invention, download specific portions of this file for viewing. Examples of such application would include sports events, concerts and the like where a user may wish to view only certain portions of the event. By configuring the stored imagery on the server in accordance with searchable parameters, the complete data file- for example a football match- may be sub-divided into individual portions, each of the portions being seperably retrievable by the user. A user may for example wish to search a database of all football matches for a particular day or team, and then download the imagery showing the goals. Such an application may be provided by the present invention by effecting firstly a storage of the image in a searchable fashion and then enabling the subsequent retrieval in individual sub-portions.

It will be further appreciated that restrictions on access to the stored datafiles may be configured for specific users. Such restrictions may for example be employed where the user is a minor and the content that may be downloaded needs to be filtered. Such filtering is desirably effected by maintaining a sequence of user profiles on the server and associating registered users with one or more user profiles. On subsequent access to the server, the user may be restricted to either access datafiles having content that matches their profile or may be allowed to search a full database but then not download certain materials.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A system for providing media-data over a communications network between a server device and one or more client devices, the server device being adapted to store a plurality of media-data files and to transmit a selected data file, on demand, to the client device where it may be played by a user, and wherein the data file stored on the server device may be subdivided into two or more transmission portions, each portion being independently transmittable to the client device, the subdivision being defined by the user.

2. A system according to claim 1 wherein the communications network is a wireless telecommunication network.

3. A system according to any of the preceding claims wherein the data is audio data.

4. A system according to any of the preceding claims wherein the server is adapted to enable an encoding of the selected data file prior to transmission of the datafile to the client device, the client device being adapted to decode the data file on receipt.

5. A system according to claim 4 wherein the data encoding is carried out in accordance with SPEEX codec techniques.

6. A system according to any of the preceding claims wherein the subdivision of the data file into the individual portions is effected by means of voice commands issued at the client device and transmitted to the server device.

7. A system according to any of the preceding claims wherein the data is transmitted from the server device to the client device by selected downloading.

8. A system according to any of claims 1 to 7 wherein the data is transmitted from the server device to the client device by streaming.

9. A system according to claim 7 wherein the downloading of the data is carried out using the HTTP protocol.

10. A system according to claim 8 wherein the streaming of the data is carried out using the RTSP protocol.

11. A system according to any of the preceding claims wherein the server device includes two data stores, a first data store containing the data which may be transmitted to the client server, and a second data store containing information associated with the users of the system.

12. A system according to any preceding claim wherein the client device is one of:
a) a cell phone
b) a hand held computer
c) a gateway device
d) an audio book device.

13. A system according to any preceding claim further including authentication means, the authentication means being adapted to authenticate users prior to transmission of data from the server device to the client device..

14. A system according to claim 13 wherein the authentication means is further adapted to associate an authenticated user with a user profile, the user profile defining the type of data file that may be transmitted to that user.

15. The system as claimed in any preceding claim wherein the server device includes a user interrogatable datastore, an interrogation of the datastore in accordance with user input parameters effecting a retrieval of datafiles best matching the input parameters, retrieved datafiles being tranmissable to the client device in one or more transmission portions.

16. The system as claimed in any preceding claim wherein the client device is adapted to effect, upon initiation by a user command, a bookmark in the played data file, the bookmark indicating a desired location in the data file where the user wishes to return to at a later period.

17. The system as claimed in claim 16, wherein the client device is adapted, on effecting a bookmark in a played datafile, to transmit to the server device an indicator that the bookmark has been effected such that the server device can effect a bookmark for that user in the corresponding portion of the datafile stored on the server device.

18. A method of providing one or more remote users with datafiles, the datafiles being playable on a client device associated with the user, the method comprising the steps of:
maintaining a datastore at a server device of a plurality of datafiles, each of the datafiles having definable parameters so as to enable a search of the datastore so as to provide a subset of the stored plurality of datafiles,
effecting a subdivision of each of the plurality of datafiles into one or more individually transmissable portions, each of the transmissable portions being searchable based on user input parameters,
receiving a request from a client device associated with a remote user for one or more datafiles, the request having a set of search parameters associated therewith,
retrieving from the datastore the datafiles that best match the search parameters provided by the user and displaying that subset for the user, and
enabling a transmission of one or more transmissable portions to the user based on a user selection from the subset, the transmitted portion being playable on the user client device.

19. The method as claimed in claim 18 further including the step of enabling a user to bookmark a portion of the transmitted portion being played on the user client device, the bookmark defining a portion in the played portion which the user either wishes to return to later or marks a portion where the playing of the transmitted portion should be resumed at a later time period.

20. The method as claimed in claim 19, wherein on bookmarking a portion of the transmitted portion, a user can make a subsequent request for transmission of that transmission portion to the server device, the server device being adapted to effect a search of previously transmitted portions to that user, and resume transmission of the specifically requested transmission portion from the location of the previously applied bookmark.
